# EUROPEAN PATENT APPLICATION

(11) **EP 1 568 434 A1**
(43) Date of publication of application: **31.08.2005**
(21) Application number: 05007268.5
(22) Date of filing: 26.05.2000
(51) Int. Cl.: B23K 20/12, E04C 3/00, B61D 17/04

(54) **A structural body and method of its manufacture**

(30) Priority: 28.05.1999 JP 14913399; 06.09.1999 JP 25161399; 14.09.1999 JP 25973899
(62) Divisional of application: 00304506.9
(71) Applicant: Hitachi, Ltd., Tokyo 100-8280 (JP)
(72) Inventor: Kawasaki, Takeshi, Kudamatsu-shi Yamaguchi 744-0002 (JP); Ezumi, Masakuni, Kudamatsu-shi Yamaguchi 744-0002 (JP); Yono, Masaki, Kudamatsu-shi Yamaguchi 744-0002 (JP); Sagawa, Toshiaki, Yanai-shi Yamaguchi 742-0021 (JP)
(74) Representative: Paget, Hugh Charles Edward

(57) **Abstract**

Two joined hollow frame members have face plates 11,12,21,22 connected in a truss manner by ribs 13A,13B,23A,23B. An end portion of one face plate 11,21 is positioned at the vicinity of an apex of the truss structure. An end portion 12b,22b of the other face plate projects further. The end portions 12b,22b are joined by friction stir joining from above. A connection member 30 is arranged between the upper face plates 11,21 and joined from above by friction stir joining. A load applied in the friction stir joining time is received by the ribs 13A,13B,23A,23B. A lightweight structure and high rigidity performance can be obtained.

## Description

### Background of the Invention

### Technical Field

The present invention relates to a structural body and a method of manufacturing a structure body. For example, the present invention is applicable to structural bodies made of aluminum alloy extruded frame members which are used in a railway vehicle, a building structure, etc.

### Prior Art

Friction stir joining is a method in which by rotating a round rod (called a "rotary tool") inserted into the joint zone and moving the rotary tool along the joining line of for example extruded frame members, the joining material is heated, softened and plastically fluidized so that solid-state joining occurs.

The rotary tool is comprised of a small diameter portion which is inserted into the joining material and a coaxial large diameter portion adjacent the small diameter portion. The boundary or shoulder between the portions of the rotary tool is inserted a little into the joining material. This technique is disclosed, for example, in EP-A-0797043, which in Fig. 9 shows joining of two faces of hollow extruded frame members carried out from one of the two faces. Further, a coupling member for preventing deformation of the hollow extruded frame members is shown.

A point of difference between friction stir joining and arc welding is that in friction stir joining on insertion of the rotary tool a large load is applied. This load acts mainly in the insertion direction (axial direction) of the rotary tool. When hollow extruded frame members are joined by friction stir joining, this insertion force acts against a rib which connects two parallel face plates, and there is a risk that the hollow extruded frame member is deformed. For these reasons, it is necessary to form a structure in which the deformation of the coupling member portion can be prevented. For this purpose in EP-A-0797043 at a joining portion of the two hollow extruded frame members a vertical plate (called a "lengthwise rib") joining two face plates of the hollow extruded frame member is provided. This lengthwise rib is positioned at an extension line of the axis of the rotary tool. The lengthwise rib is connected to two face plates of the hollow extruded frame member. Since a large load acts on this rib, it is necessary to make its plate thickness large. For this reason, there is a limitation on obtaining a light weight coupling member.

Further, this lengthwise rib of the hollow extruded frame member will be studied from another aspect. When an outside bending force acts on the hollow extruded frame member, it is known that a portion dominant for rigidity performance is the rib. To improve the rigidity performance, it is desirable to arrange the rib to be consistent with a forty five degree angle direction relative to the face plate, which is a main stress force perpendicular to a shearing force. However, the lengthwise rib being perpendicular to two sheet face plates hardly contributes as a strengthening member.

### Summary of the Invention

An object of the present invention is to provide a structural body having a light weight structure and a high rigidity performance and a method of manufacturing such a structural body.

The invention in its various aspects is set out in the claims.

### Brief Description of the Drawings

Fig. 1 is a longitudinal cross-sectional view showing a joining portion of one embodiment of a structural body of the present invention;
Fig. 2 is a longitudinal cross-sectional view showing more of the joining portion of Fig. 1;
Fig. 3 is a diagrammatic view showing a pair of a hollow frame members;
Fig. 4 is a perspective of a car body of a railway vehicle to which the present invention is applied;
Fig. 5 is a diagrammatic cross-sectional view of a joining portion of another embodiment of a structural body of the present invention;
Fig. 6 is a longitudinal cross-sectional view showing a joining portion in a further embodiment of the present invention;
Figs. 7 to 11 each show in longitudinal cross-sectional view a joining portion of respective further embodiments of structural bodies of the present invention;
Fig. 12 is a diagrammatic view of a joining process of an embodiment of the invention;
Fig. 13 is a cross-sectional view after the joining of Fig. 12;
Fig. 14 is a diagrammatic view of another joining process used in the present invention;
Fig. 15 is a cross-sectional view showing after the joining of Fig. 14; and
Fig. 16 is a longitudinal cross-sectional view showing a joining portion of yet another embodiment of a structural body of the invention.

### Description of the Embodiments

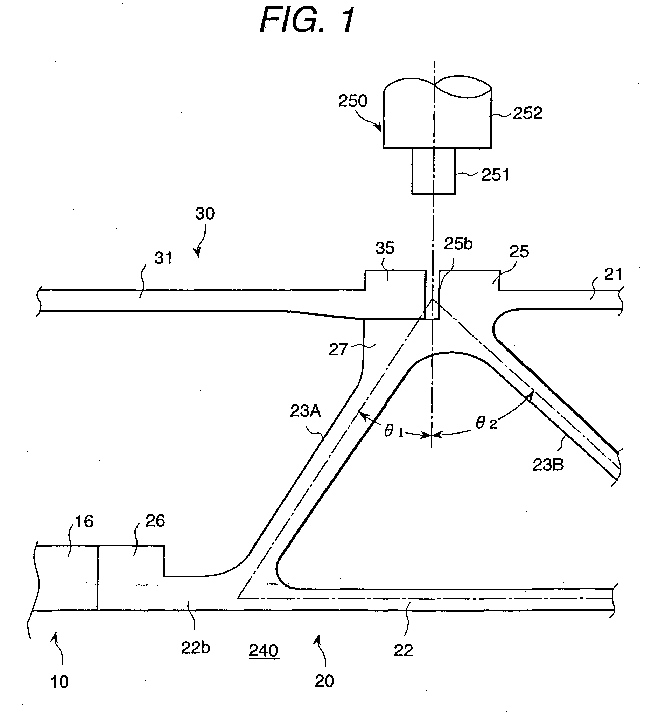

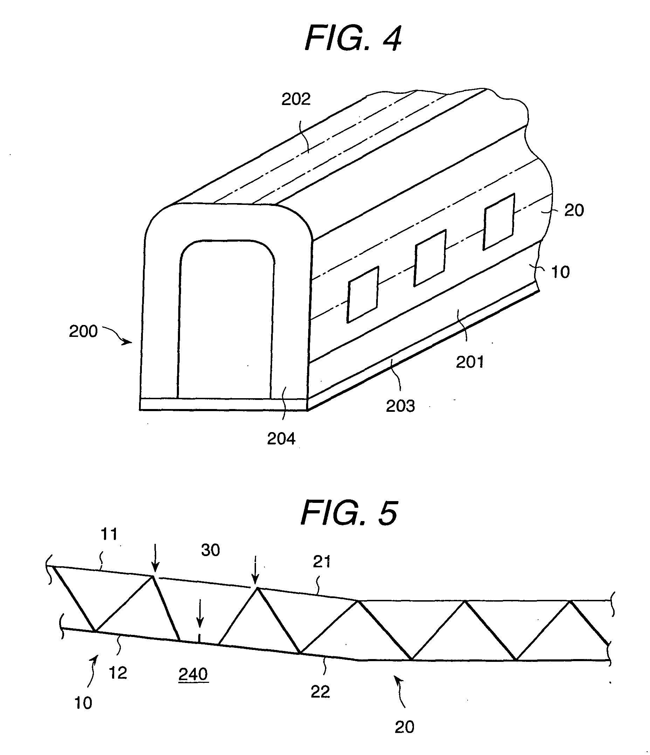

One embodiment of a structure body and its manufacture according to the present invention is shown in Figs. 1 to 4. Fig. 4 shows a car body 200 comprised of a side structure body 201, a roof structure body 202, a base frame 203 providing a floor of the car body 200, and an end structure body 204 at a longitudinal end of the car body 200.

Each of the side structure body 201, the roof structure body 202 and the base frame 203 is made by joining plural extruded frame members. The longitudinal direction of the extruded frame members is in the longitudinal direction of the car body 200. Each extruded frame member is a hollow frame member made of an aluminum alloy.

Figs 1 to 3 show a joining method of hollow extruded frame members 10, 20 of the side structure body 201. Other portions of the side structure and other structural bodies are similar.

The frame members 10, 20 are each comprised of two sheet face plates 11, 12 and 21, 22 and ribs 13, 23 arranged in a truss shape. The two sheet face plates 11, 12 (21, 22) are substantially parallel. The pitch P of the truss structure of ribs 13, 23 is uniform. The truss structure is constituted by the ribs 13, 23 and a center line of the plate thickness of the face plates 11, 12, 21, 22, with an apex of the triangular shape at one of the face plates.

Near apexes of the truss structure at an inner side of the railway car, rails 19, 29 for installing fittings and devices such as interior mounting sheets and chairs, etc. are provided integrally. The rails 19, 29 are comprised of two L shape members.

End portions 12b, 22b of the face plates 12, 22 at the outer face side of the car body project laterally towards the adjacent hollow frame members 20, 10. At abutting ends of the end portions 12b, 22b friction stir joining is carried out. The plate thickness of each end portion 12b, 22b is greater than at other portions of the face plates 12, 22.

The face plates 11, 12 at the car inner side are joined through a connection member 30. At abutted portions of the connection member 30 and the face plates 11, 21 friction stir joining is performed. The joints of the connection member 30 and the face plates 11, 21 are positioned in the vicinity apexes of the truss structure formed by the ribs and face plates.

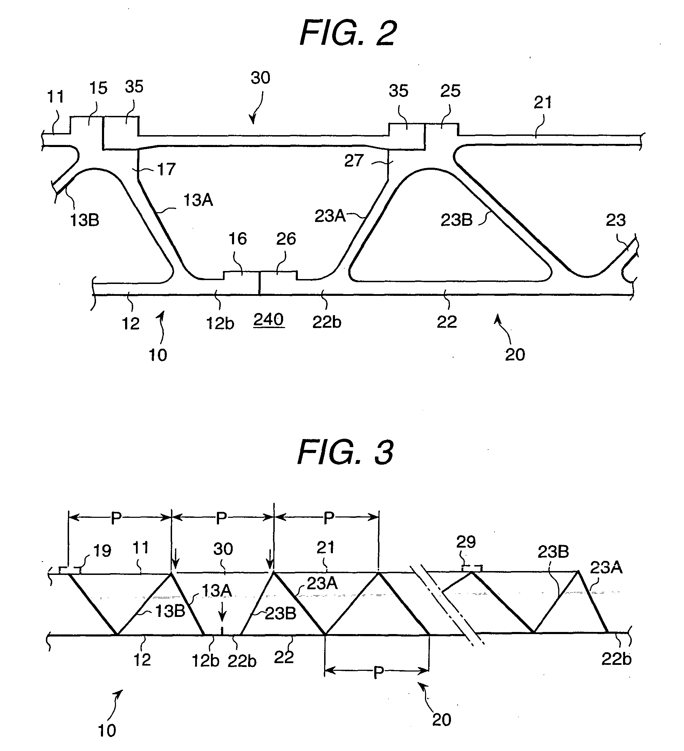

For the joining, the hollow frame members 10, 20 are mounted on a bed 240 indicated in Figs. 1 and 2 with the face plates 12, 22 below. From above the rotary tool 250 is inserted into the joining portions and friction stir joining is carried out. The friction stir joining is thus carried out from the inner side of the car.

The end portions 12b, 22b have raised portions 16, 26 which project towards the car inner side. At the end portions of the face plates 11, 21 (namely, at the apex of the truss structure at the end portion), raised portions 15 and 25 which project towards the car inner side (namely, outwardly of the face plates 11, 21) are provided.

The end portions of the connection member 30 have raised portions 35, which also project to the car inner side. The height and width of each of the raised portions 15, 25, 35, 16, 26 are substantially uniform.

The abutment faces (e.g. face 25b) of the raised portions 15, 25, 35, 16, 26 are perpendicular to the surfaces of the face plates. The end portions of the connection member 30 are mounted on the seats 17, 27 at the vicinity of the apex of the truss structure, projecting from the ribs 13A, 23A. By the vertical faces 15b, 25b and the upper faces of the seats 17, 27, recesses or re-entrants are constituted, facing vertically and horizontally.

The abutment faces (e.g. face 25b) are orthogonal to the face plates 11, 12, 21, 22, and extend in the thickness direction of the hollow-frame members 10 and 20.

The position of the face 25b is offset slightly, towards the other end of the hollow frame member 20 from the normal line which passes through the apex of the truss structure. If the face 25b is on the normal line which passes through the apex of the truss structure, when the width of the connection member 30 is short (it is within a tolerance error), the insertion position of the rotary tool 250 approaches to the connection member 30 side. In this case, the width position of the two raised portions 15, 35 is detected and the axis of the rotary tool 250 is made coincident with the centre of this width.

The lower face of the end portions of the connection member 30 is angled slightly downwards, so that the joining bead may be made thick. The web 31 (except for thickenings at the end portion) of the connection member 30 is provided on the extension line of the face plates 11, 21 of the hollow frame members 10, 20. The plate thickness of the web 31 is thicker than or the same as the thickness of the face plates 11 and 21. The connection member 30 is an extruded frame member of the same material as the hollow frame members 10, 20, and has the same length.

The distance P from the end portion of the face plate 11 to the end portion of the face plate 21 (the distance between the apex of the end truss structure of the hollow frame member 10 and the apex of the end truss structure of the hollow frame member 20) is the same as the general pitch P of the truss structures. Generally, the truss structures of each hollow frame member are isosceles triangles. However, the end truss structures of the hollow frame members 10, 20 is not an isosceles triangle, because the endmost rib 13A, 23A is at an angle θ, to the vertical which is smaller than the angle θ₂ of the normal ribs 13B, 23B of the truss structures.

Thus the rib 13A is connected to an intermediate point of the face plate 12 and the rib 23A is connected to an intermediate point of the face plate 22. Between the connection points of the ribs 13A, 23A to the face plates 12, 22, a space for inserting the friction stir joining apparatus is generated.

Since the ribs 13A, 23A are more vertical (θ 1 is smaller than θ 2) than the ribs 13B, 23B, the plate thickness of the ribs 13A, 23A is more than that of the ribs 13B, 23B. The plate thickness of the ribs 13B, 23B is more than that of other ribs 13. The connections between the ribs 13A, 13B, 13 and the face plates 11, 12, 21, 22 have rounded fillets. The thickness of the connection member 30 is determined according to the required strength.

The manufacture of this structural body will be explained. The hollow frame members 10, 20 are mounted on and fixed to the bed 240. The end portions 12b, 22b are contacted or approached. The raised portions 16, 26 are temporarily joined by arc welding from above. This temporary welding is carried out intermittently.

The upper face of the bed 240 on which the abutted face plates 12b, 22b are mounted is flat. Three portions which are the vicinity of the abutted portion of the face plates 12b and 22b, a cross-point vicinity of the ribs 12A and 22B, the face plates 12b and 22b, and a cross-point vicinity of the ribs 12B and 22B and the face plates 12 and 22 are mounted on the bed 240 having the same height.

In this condition, the rotating rotary tool 250 of the friction stir joining apparatus is inserted from above the abutted raised portions 16, 26 and is moved along the joining line, to perform friction stir joining. The axis of the rotary tool 250 is in a vertical plane but is inclined rearwardly relative to the advancing direction of the rotary tool 250. The width position of the two raised portions 16, 26 is detected and the axis of the rotary tool 250 is positioned at their centre.

The rotary tool 250 has a large diameter portion 252 and a coaxial small diameter portion 251 projecting from the end of the large diameter portion 252. During joining, the tip end of the small diameter portion 251 of the rotary tool 250 is positioned below the level of the upper face of the plates 12b and 22b. The lower end of the large diameter portion 252 of the rotary tool 250 is positioned between the upper faces of the raised portions 16, 26 and level of the upper faces of the plates 12b, 22b. The diameter of the large diameter portion 252 is smaller than a total width of the two raised portions 16, 26. The small diameter portion 251 is a screw member.

By this friction stir joining any clearance formed between the abutted faces of the portions 12b and 22b is buried and joined. The outer face side (the outer car side) of the abutted portions remains flat. At the outer face side, there is no recess left at the joining line.

Next, the connection member 30 is mounted on the seats 17, 27 of the face plates 11, 21. The ends of the connection member 30 are contacted or approached to opposed ends of the face plates 11, 21. The adjacent pairs of raised portions 15, 35 and 25, 35 are fixed temporarily and at spaced points (intermittently) by arc welding. With the rotary tool 250 inserted into the abutted portions from above and moved along the joining lines, friction stir joining is carried out. The width position of the two adjacent raised portions 15, 35 and 25, 35 is detected and the axis of the rotary tool 250 is positioned at the centre thereof.

The axis of the rotary tool 250 is thus at the apex of the truss structure of the two ribs 23A, 23B or on the perpendicular line which passes through the vicinity of the apex. The possible amount of eccentricity corresponds to the increase of the plate thickness of the ribs 13A, 13B, the shape of the fillet for connecting the rib and the face plate, the thickness of the connection portion, etc.

The tip end of the small diameter portion 251 of the rotary tool 250 is inserted deeply from the upper face of the seat 17. The lower end of the large diameter 252 of the rotary tool 250 is positioned between the top faces of the raised portions 15, 25, 35 and the level of the upper faces (at the car inner side) of the face plates 11, 31. The diameter of the large diameter portion 242 of the rotary tool 250 is smaller than the total width of the two raised portions 15, 35 (25, 35).

The joining of the face plates 11 and 21 with the two ends of the connection member 30 may be carried out using the rotary tool 250 which is used for the joining of the end portions 12b, 22b. For example, the joining of the face plate 11 is carried out and next the joining of the face plate 21 is carried out. When two rotary tools are used, the joining of both ends of the connection member 30 can be carried out at the same time.

The joining at both faces of the hollow frame members is thus carried out from one face side. Accordingly, it is unnecessary to reverse the structure body. As a result, the structure body can be manufactured with low cost and high accuracy.

Further, the outer faces of the joining portions 12b, 22b can be joined flush, to give a flat surface. The raised portions 16, 26, 15, 25, 35 are provided in the structure interior or at the car inner side, but they are not provided on the outer face side or the car outer side where a smooth face is required. Further, at the outer face there is raised or recessed portions generated by the rotary tool, requiring to be cut off. The car body can be manufactured with the low cost.

The insertion force during the joining of the connection member 30 and the face plates 11, 21 is supported in each case by the two ribs 13A, 13B (23A, 23B) which are arranged directed at the axis of the rotary tool 250. For this reason, the bending of the ribs can be restrained. The plate thickness of the ribs can be relatively thin, and a light structure can be obtained. Further, the bending of the face plates 11, 21, 31 can be restrained.

Since the bed 240 which supports the ribs 13A, 13B, 23A, 23B has a uniform height, the bending of the face plates 12, 22 can be prevented.

After the friction stir joining, the whole structure body is constituted substantially as a truss structure. For this reason, since the joint portion of the hollow frame members 10, has a truss structure, the bending rigidity performance of the structure can be improved and a light weight structure can be obtained.

Further, since the plate portions 12b, 22b, the ribs 13A, 23A and the connection member 30 is constituted substantially as a truss structure, this portion is not weak. However, consideration should be given to the plate thickness.

The inclination angle θ 1 of the ribs 13A, 23A may be larger than the angle θ 2 of the ribs 13B, 23B. So that the width of the connection member 30 is large. This makes it necessary to make the plate thickness large and then the weight becomes large. This can be done in a case where a large opening is necessary for insertion of the friction stir joining apparatus.

When the inclination angles θ 1 and θ 2 are the same, an isosceles triangle can be formed. Accordingly, the plate thickness of the ribs 13A, 13B (23A, 23B) can be the same. Further, the plate thickness of the ribs 23A, 23B can be made thinner than that of shown in Fig. 1. However, the size of the truss structure of this isosceles triangle is formed the same of the truss structure of the other portions, the width of the connection member 30 can be large.

When the inclination angles θ 1 and θ 2 of the ribs 13A, 13B (23A, 23B) are the same as the inclination angle θ 1, the truss structure of the end portion can be a small isosceles triangle. The size of the bottom side of the truss structure of this end portion is smaller than the size of the bottom side of the other portions.

Accordingly, a distance from the intersection point of the rib 13B (23B) and the face plate 12 (22) to the end portion of the hollow frame member 10 (20) can be formed small. As a result, the width of the connection member 30 can be the same as the width of the connection member 30 shown in Fig. 1.

The pitches of all truss structures including the portion with the connection member 30 are the same.
The size of the truss structures, except for the truss structure of the end portion, are the same.
Accordingly, the design of the hollow frame member can be standardized.

The apex formed by the two ribs 13A, 13B (23A, 23B) may positioned outwardly from the face plates 11, 21.

The abutment faces 15b, 25b can be located towards the connection member 30 from the apex of the two ribs 13A, 13B (23A, 23B). However, consideration must be made about the angle θ, the plate thickness, the load etc. of the rib 13A (23A).

Further, the rotary tool 250 can be inserted in a direction at the middle of the angle formed by the two ribs 13A, 13B (23A, 23B). The axis of this tool is directed at the apex of the truss structure in this case.

The joining of the connection member 30 in the above embodiment is by friction stir joining, but may be carried out by other welding, such as arc welding. In the case of arc welding, since there is no load during the joining, the ribs 13A, 13B (23A, 23B) can be made thin. The joining of the connection member 30 can be carried out intermittently.

The joining of the face plate portions 12b, 22b may be carried out using other welding such as arc welding. If this welding forms welding beads at a rear face, e.g. outside faces, it is necessary to cut off the beads after welding.

In the above embodiment, the face plates 11, 12 and the face plates 21, 22 are parallel, but one of the face plates may be inclined to the other.

In the plate thickness of the ribs 13A and 13B (23A and 23B), the plate thickness of the face plates 11 and 12 side is formed thick than the plate thickness of the face plates 12 and 22 side. By forming the face plates 11 and 21 side, during the joining it becomes easily the high temperature.

Fig. 5 shows a further embodiment in which the normal line to the face plates at the joining portion is inclined. One end of the hollow frame member 20 is horizontal. The hollow frame members 10, 20 are mounted on the bed 240. This permits easy joining at the end portion of the side structure body 201. The axis of the rotary tool is along a normal line of the face plate. This normal line passes through the vicinity of the apex of the truss. An arrow mark shows the position and the direction of the rotary tool 250.

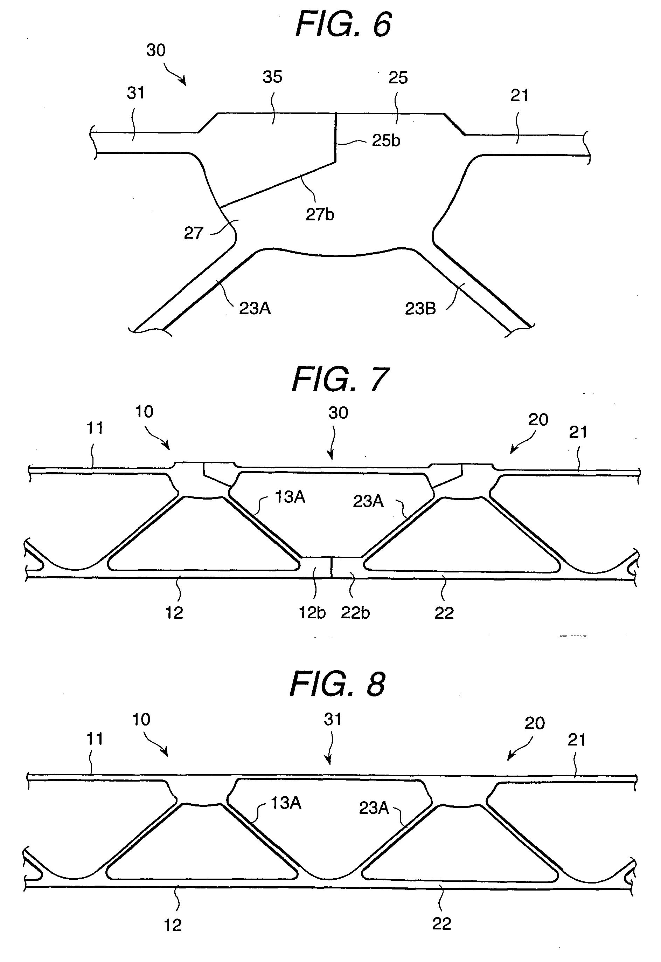

Fig. 6 shows a further embodiment where the face 27b of the seat 27 for mounting the connection member 30 is inclined downwardly. The end portion of the connection member 30 is correspondingly inclined. When the face plate portions 12b, 22b are joined, the spacing of the raised portions 15, 25 is made small. By the provision of the inclined face 27b, the connection member 30 can be arranged easily.

In the embodiments shown in Figs. 7 and 8, the lengths of the face plate end portions 12b, 22b are short, and these portions are thick. After the joining of the portions 12b, 22b by friction stir joining from above these portions 12b, 22b may be cut off into the arc shape from above. This arc conforms to the ribs 13A, 23A. Accordingly, the strength lowering due to stress concentration can be prevented.

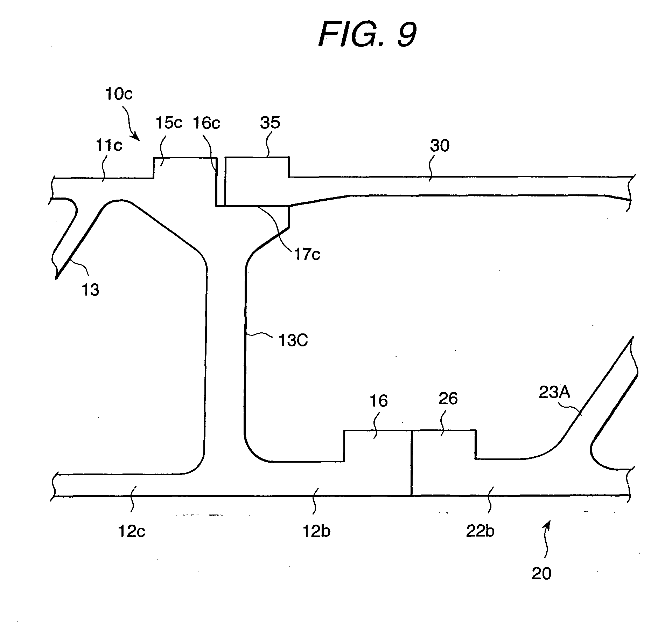

In the embodiment shown in Fig. 9 a cross-rib 13C at the end portion of the hollow frame member 10c is orthogonal to the face plates 11c and 12c. At the connection portion of the face plate 11c and the rib 13C the recess and the seat 17c are provided similarly as described above. A projecting flange provides the seat 17c, on which the end of the connection member 30 is mounted. The abutting faces at this joining portion are within the range (extension) of the plate thickness of the rib 13C. The face 16c is normal to the face plate. The raised portion 15c is provided at the end portion of the face plate 11c. With this structure, the insertion force during the friction stir joining is supported by the rib 13C. In this case at the end portion of the hollow frame member it is not possible to provide the triangular truss structure.

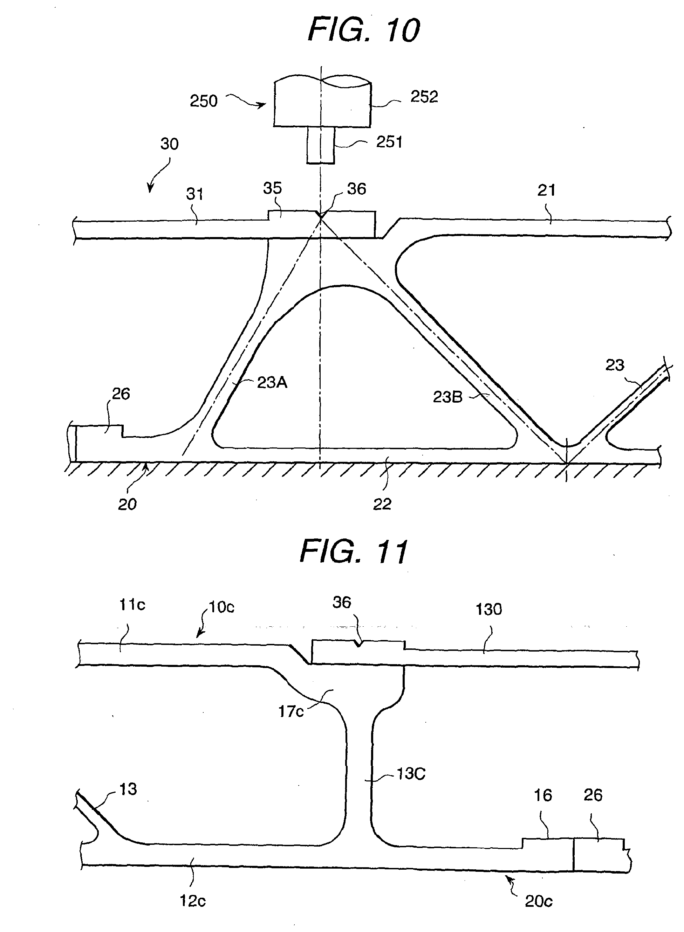

In the embodiment of Fig. 10, the width of raised portion 35 is larger than the diameter of a large diameter portion 252 of tool 250. The tool 250 penetrates through the portion 35 to effect the join. At a centre of the width of the raised portion 35 a groove 36 is provided. A rotation axis of the tool 250 coincides with the groove 36. A sensor of the friction stir joining apparatus detects the groove 35 and the tool 250 is moved along the groove 36. When joining face plate portions 12b, 22b, the position relationship between the tool 250 can be achieved by the sensor in the same way.

In the embodiment of Fig. 11, the rib 13C at the end portion of the hollow frame member 10c is orthogonal to the face plates 11c and 12c. At the connection of the face plate 11c and the rib 13C the recess and the seat 17c are provided similarly as above. A thickening or flange 17d provides the seat 17c on which the end of the connection member 130 is mounted. The axis of the tool 250 and the groove 36 are positioned within the range (extension) of the plate thickness of the rib 13C. With this structure, the insertion force during the friction stir joining is supported by the rib 13C.

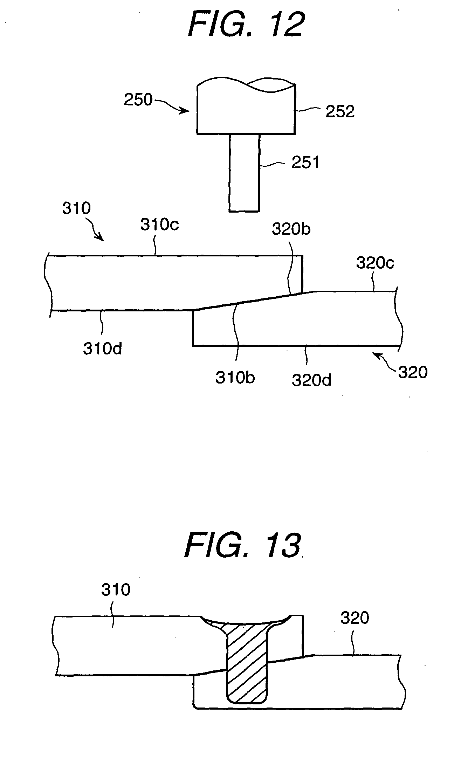

In the embodiment of Figs. 12 and 13, the structural body is one in which a tensile load acts on the joining portion. Two members 310 and 320 are overlapped at their ends, in the lateral direction. The overlapped faces 310b and 320b are inclined, at an inclination angle, for example of 4° to 10°. The other upper and lower faces 310c, 320d (320c, 320d) are parallel and horizontal. The lower face 320d of the member 320 is mounted on a bed. The members 310, 320 may be extruded frame members.

The joining line is perpendicular to the paper plane of Fig. 12. The overlapped faces 310b, 320b are at right angles to the joining line (a joining direction). The overlapped faces 310b, 320b are positioned between the end portions of the two members 310 and 320. The rotary tool 250 is moved relatively to the members 310 and 320. The small diameter portion 251 of the rotary 250 is inserted deeply through the overlapped faces 310b, 320b. The tip end of the small diameter portion 251 is inserted to near of the lower face 320d. The lower end of the large diameter portion 252 is inserted a little way from the upper face 310c of the member 310.

Fig. 13 shows the condition of after the joining. The hatching shows the joining bead (a heat affected portion). A size of the joining bead is a little larger than an outer shape of the rotary tool 250.

In this structure, the rotational axis of the tool 250 is vertical, but the overlapped faces 310b, 320b are inclined to the axis of the tool 250. The members 310, 320 are stirred and mixed according to the inclination angle of the overlapped faces 310b, 320b. At the axial direction of the rotary tool 250 the members 310, 320 are mixed. Accordingly, even if before the joining there is a covering oxide film, good mixing is carried out. Even when the members 310, 320 are pulled in right and left direction, a high strength can be obtained. The members 310, 320 can have tensile strength in the right- left direction.

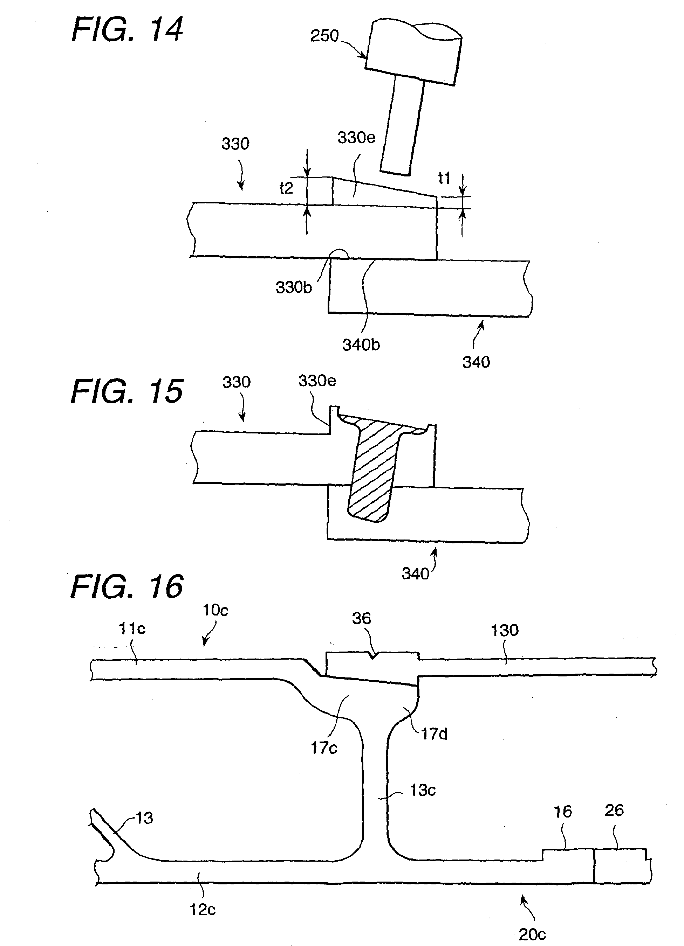

In a further embodiment shown in Figs. 14 and 15 the end portions of the members 330, 340 are overlapped. The members 330, 340 are flat plates, except for a raised portion 330e on member 330. The overlapped faces are horizontal. The rotary tool 250 is inclined, e.g. at 4° to 10° to the vertical. The inclination direction towards the ends of the members 330, 340. The raised portion 330e projects towards the entry side of the rotary tool 250.

The height of the raised portion 330e varies from t1 to t2 from the extension line of the general upper face of the plate 330. The end face of the plate and the end face of the raised portion 330e are orthogonal (vertical) to the plate, and substantially co-planar. The upper face of the raised portion 330e is inclined, and orthogonal to the axis of the rotary tool 250. Accordingly, in the member 330 the amount of unnecessary material can be lessened. In Fig. 15, the joining bead shown by the hatching is inclined.

In the embodiment of Fig. 16, the rib 13C at the end portion of the hollow frame member 10c is orthogonal to the face plates 11c and 12c. Overlapping contacting surfaces of the hollow frame member 10c and a connection member 130 are not horizontal but inclined, being also inclined to the axis of the rotary tool 250. The thickening 17d provides the seat 17c. The rotational axis of the rotary tool 250 and the groove 36 are positioned within the range (extension) of the plate thickness of the rib 13C. With this structure, the insertion force during the friction stir joining is supported by the rib 13C.

The following numbered paragraphs (paras.) contain statements of broad combinations of the inventive technical features herein disclosed:-
1. A method of manufacturing a structural body, comprising the steps of:
   (i) providing two hollow frame members in which two sheet face plates are connected as a truss structure by plural ribs, an end portion of a first one of said face plates is positioned at the vicinity of an apex of said truss structure, and an end portion of the second of said face plates projects laterally further than said end portion of said first face plate;
   (ii) joining said projecting end portions of said second face plates to each other from a side thereof which is closer to said first face plates;
   (iii) arranging a connection member between said end portions of said first face plates of said two hollow frame members; and
   (iv) joining respective end portions of said connection member to the respective first face plates.
2. A method according to para. 1, wherein in step (ii) said projecting end portions are joined by friction stir joining.
3. A method according to para. 2, wherein in step (iv) the joining is carried out by friction stir joining.
4. A method according to any one of paras. 1 to 3, wherein in step (ii) said connection member is overlapped in the vicinity of said apex, with each of the respective hollow frame members.
5. A method of manufacturing a structural body comprising the steps of:
   (i) providing a first hollow frame member in which two sheet face plates are connected as a truss structure by plural ribs, an end portion of a first one of said face plates is positioned at the vicinity of an apex of said truss structure, and an end portion of the second of said face plates projects laterally further than said end portion of said first face plate;
   (ii) providing a second hollow frame member in which two face plates are joined by a first rib substantially perpendicular to said face plates and by a second rib connected to an end portion of said first face plate and an intermediate portion of said second face plate, wherein an end portion of the second of said face plates projects laterally further than said end portion of said first face plate;
   (iii) joining said projecting end portions of said second face plates to each other from a side thereof which is closer to said first face plates;
   (iv) arranging a connection member between said end portions of said first face plates of said two hollow frame members;
   (v) joining respective end portions of said connection member to the respective first face plates.
6. A method according to para. 5, wherein in step (iii) said projecting end portions are joined by friction stir joining.
7. A method according to para. 6, wherein in step (v) the joining is by friction stir joining.
8. A method according to para. 5, 6 or 7, wherein in step (iv)
   one end portion of said connection member is overlapped at the said vicinity of said apex, with said first hollow frame member; and
   another end portion of said connection member is overlapped with a seat provided on said first rib of said second hollow frame member.
9. A structural body wherein
   two hollow frame members are joined;
   in each said hollow frame members, two sheet face places are connected as a truss structure by plural ribs, an end portion of a first one of said face plates is provided at a vicinity of an apex of said truss structure, and an end portion of the second of said face plates projects laterally further than said end portion of said first face plate;
   said projecting end portions are joined to each other; and
   said end portions of said first face plates of the two hollow frame members are joined by a connection member.
10. A body according to para. 9, wherein said connection member is provided on an extension line of said first face plates.
11. A body according to para. 9 or 10, wherein
   the joining of said projecting end portions is by a friction stir joint.
12. A body according to para. 9, 10 or 11, wherein
   the joint between both ends of said connection member and said first face plates is friction stir joints.
13. A body according to para. 12, wherein
   the respective end portions of said connection member are overlapped with seats which is provided at said end portion of said first face plates.
14. A body according to any one of paras. 9 to 13, wherein
   the inclination angle of said rib at said end portion of each hollow frame member is smaller than that of the next adjacent rib in the respective hollow frame member.
15. A body according to any one of paras. 9 to 14, wherein
   the distance between the joints at the ends of said connection member is the same as the regular pitch of the truss structure of the hollow frame members.
16. A structural body comprising,
   a first hollow frame member having two sheet face plates connected in a truss structure by plural ribs, an end portion of a first one of said face plates being in the vicinity of an apex of said truss structure, and an end portion of the second of said face plates projecting laterally further from said end portion of said first face plate; and
   a second hollow frame member having two sheet face plates joined by a first rib which is substantially orthogonal to said face plates which connects an end portion of a first one of said face plates and an intermediate point of the second face plate;
   wherein said end portions of said second face plates are joined to each other from the side thereof facing said first face plates; and
   said end portions of said first face plates are joined by a connection member.
17. A structural body according to para. 16 wherein
   said connection member lies on an extension line of said first face plate.
18. A hollow frame member comprising two sheet face plates connected as a truss structure by plural ribs, wherein at an edge of said member an end portion of a first one of said face plates is positioned at a vicinity of an apex of said truss structure and an end portion of the second of said face plates projects laterally further than said end portion of said first face plate.
19. A hollow frame member according to para. 18, wherein
   the distance from said apex of said truss structure to the end of said end portion of the second face plate is substantially half the regular pitch of the truss structure.
20. A hollow frame member according to para. 18, wherein
   the inclination angle of the first rib closest to said edge is smaller than the inclination angle of the next adjacent second rib.
21. A hollow frame member according to para. 18, wherein
   in said truss structure a first said rib closest to said edge of said hollow frame member and the next adjacent rib form substantially to an isosceles triangle.
22. A hollow frame member according to para. 18 having a re-entrant portion at the vicinity of said apex of said truss structure defined by a first surface which faces laterally outwardly of said hollow frame member and a second surface which faces outwardly in the direction away from said first face plate.
23. A hollow frame member according to para. 22, wherein said first surface is spaced from aid apex towards the opposite edge of the hollow frame member.
24. A hollow frame member according to para. 22 wherein said first surface is spaced from said apex towards the extremity of said end portion of said second face plate.
25. A hollow frame member according to para. 22 wherein a centre of the width of second surface is positioned at the vicinity of said apex of said truss structure.
26. A hollow frame member according to para. 25, wherein the enter of the width of said second surface is positioned at the vicinity of the extension of the plate thickness of one said rib of said hollow frame member.
27. Use in friction stir joining of a frame member having a face plate and, adjacent an edge of said face plate, a groove which extends along said edge.
28. Use of a frame member according to para. 27 wherein at said edge of the face plate a raised rib which projects above the surface of said plate is provided, and said groove is at a centre portion in the width direction of said raised portion.
29. Use according to para. 28, wherein said member has a second face plate having a second raised portion at an edge thereof and, a centre portion in the width direction of said second raised portion, a groove extending along the edge.
30. A method of friction stir joining including the steps of:
   overlapping one end portion of a first member and another end portion of a second member and carrying out friction stir welding along a joining line at the overlap portion with a rotary tool which is inclined relative to the width direction of the contacting surfaces at the overlap portion.
31. A structural body wherein one end portion of a first member and another end portion of a second member are joined at overlapping faces by friction stir joining, and the overlapping contacting faces are inclined to the general lateral direction of at least one of said members.
32. A structural body wherein
   one end portion of a first member and another end portion of a second member are joined at overlapping faces by friction stir joining and the centre line of the joining bead is inclined to the thickness direction of the members at the overlap.
33. Use in friction stir joining of an extruded frame member comprising at at least one end of a plate having substantially parallel faces a surface inclined to said parallel faces.
34. Use according to para. 33 wherein said inclined surface is a surface of a raised portion, said raised portion and an end portion of said plate providing a common end surface orthogonal to said parallel faces.
35. An extruded frame member wherein
   two sheet face plates are connected by plural ribs;
   an end portion of a first one of said two face plates is positioned at a vicinity of at least one said rib at an edge of a hollow frame member;
   an end portion of the other of said two face plates projects further; and
   a side of said first face plate of a connection portion of said end portion of said first face plate and said rib at said edge of said hollow frame member is inclined downwardly towards said edge.

## Claims

1. A structural body wherein one end portion of a first member and another end portion of a second member are joined at overlapping faces by friction stir joining, and the overlapping contacting faces are inclined to the general lateral direction of at least one of said members.
